(19) Europäisches Patentamt
European Patent Office
Office européen des brevets

(11) **EP 2 965 244 B1**

(12) **EUROPEAN PATENT SPECIFICATION**

(45) Date of publication and mention
of the grant of the patent:
**04.05.2022 Bulletin 2022/18**

(21) Application number: **14760693.3**

(22) Date of filing: **04.03.2014**

(51) International Patent Classification (IPC):
**H04H 60/58** *(2008.01)*   **H04N 21/439** *(2011.01)*
**H04N 21/442** *(2011.01)*   **H04N 21/658** *(2011.01)*

(52) Cooperative Patent Classification (CPC):
**H04N 21/4394; H04H 60/58; H04N 21/44218;
H04N 21/44224; H04N 21/6582**

(86) International application number:
**PCT/US2014/020337**

(87) International publication number:
**WO 2014/138074 (12.09.2014 Gazette 2014/37)**

(54) **METHODS AND SYSTEMS FOR REDUCING SPILLOVER BY DETECTING SIGNAL DISTORTION**

VERFAHREN UND SYSTEME ZUR REDUZIERUNG VON ÜBERLAUF DURCH DETEKTION VON
SIGNALVERZERRUNGEN

PROCÉDÉS ET SYSTÈMES DE RÉDUCTION DE DÉBORDEMENT PAR DÉTECTION DE
DISTORSION DE SIGNAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2013 US 201313791432
12.04.2013 AU 2013204911**

(43) Date of publication of application:
**13.01.2016 Bulletin 2016/02**

(73) Proprietor: **The Nielsen Company (US), LLC
Schaumburg, IL 60173 (US)**

(72) Inventor: **NIELSEN, Christen V.
Palm Harbor, Florida 34683 (US)**

(74) Representative: **Samson & Partner Patentanwälte
mbB
Widenmayerstraße 6
80538 München (DE)**

(56) References cited:
**WO-A2-2006/037014    JP-A- 2003 061 027
JP-A- 2005 322 262    JP-A- 2006 215 774
KR-B1- 100 911 679    US-A1- 2002 152 459
US-A1- 2004 218 701    US-A1- 2008 101 454
US-A1- 2012 148 058**

## Description

### PRIORITY APPLICATION

This application claims priority to US Patent Application No. 13/791,432, filed on March 8, 2013.

### FIELD OF THE DISCLOSURE

The present disclosure relates generally to media monitoring and, more particularly, to methods and systems for reducing spillover by detecting signal distortion.

### BACKGROUND

Audience measurement of media, such as television, music, movies, radio, Internet websites, streaming media, etc., is typically carried out by monitoring media exposure of panelists that are statistically selected to represent particular demographic groups. Using various statistical methods, the captured media exposure data is processed to determine the size and demographic composition of the audience(s) for programs of interest. The audience size and demographic information is valuable to advertisers, broadcasters and/or other entities. For example, audience size and demographic information is a factor in the placement of advertisements, as well as a factor in valuing commercial time slots during a particular program. For instance, US 2012/148058 A1 discloses methods to determine location of audience members, and teaches inter alia to store timestamped digitized audio samples.

### BRIEF DESCRIPTION OF THE DRAWINGS

FIG. 1 illustrates an example system including an example spillover manager implemented in accordance with the teachings of this disclosure to manage spillover to reduce media monitoring inaccuracies in the system.

FIG. 2 illustrates an example implementation of an example media identifying meter of FIG. 1.

FIG. 3A illustrates an example implementation of the example spillover manager of FIG. 1.

FIG. 3B illustrates an example expected frequency spectrum analyzed by the example spillover manager of FIG. 3 A.

FIG. 3C illustrates an example actual frequency spectrum analyzed by the example spillover manager of FIG. 3 A.

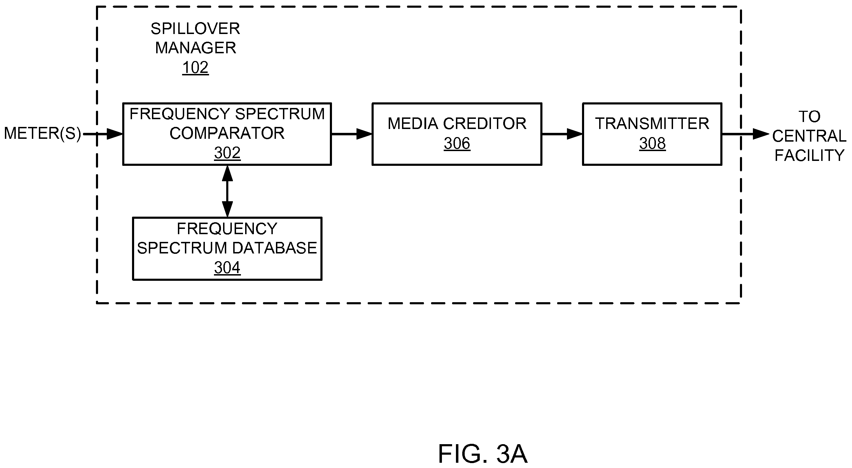

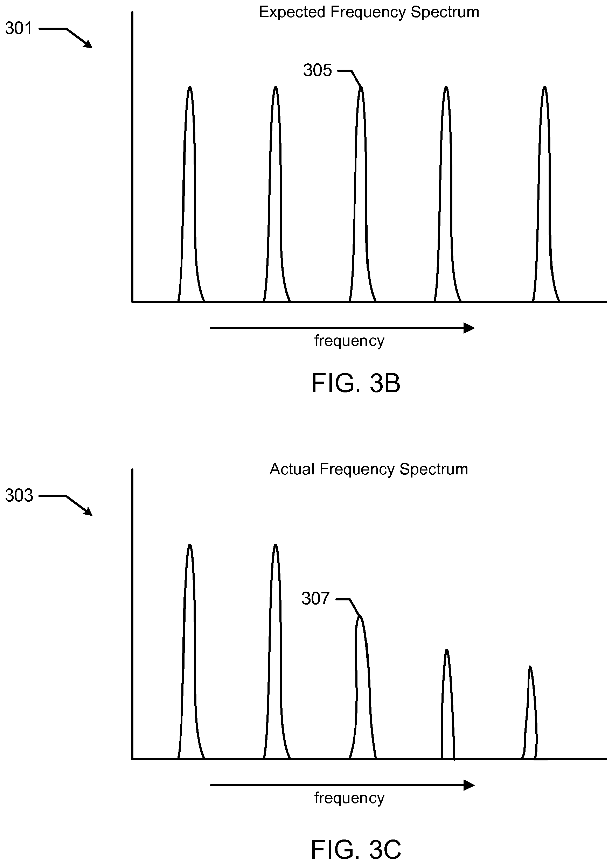

FIG. 3C illustrates an example actual frequency spectrum analyzed by the example spillover manager of FIG. 3A.

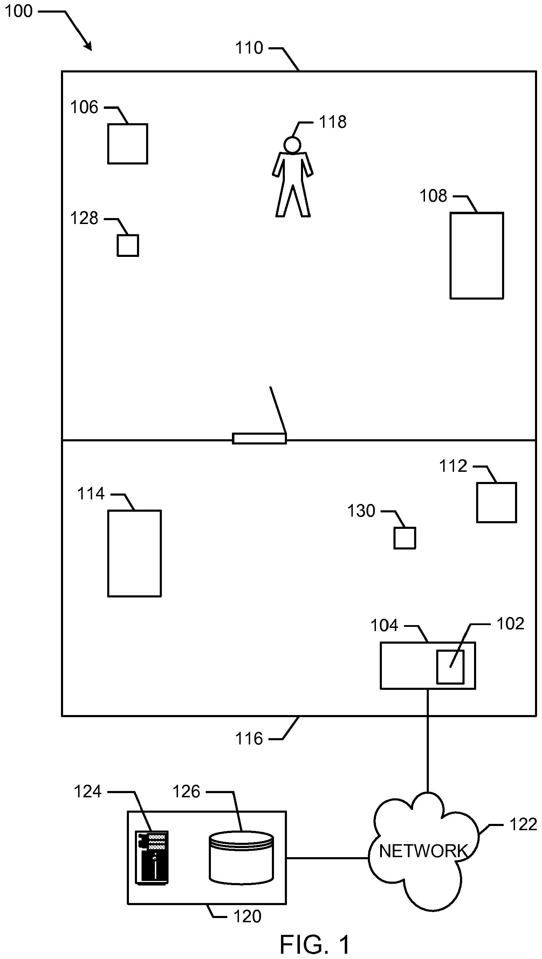

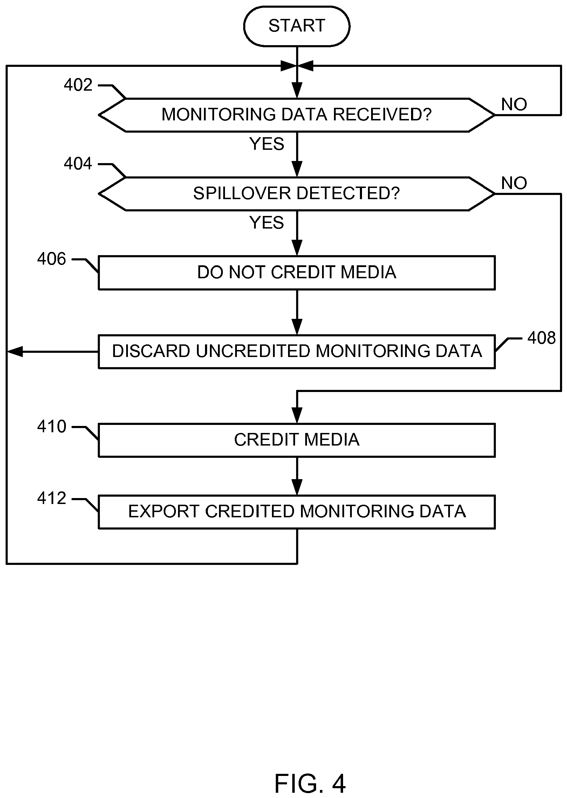

FIG. 4 is a flow diagram representative of example machine readable instructions that may be executed to implement the example spillover manager of FIGS. 1 and/or 3.

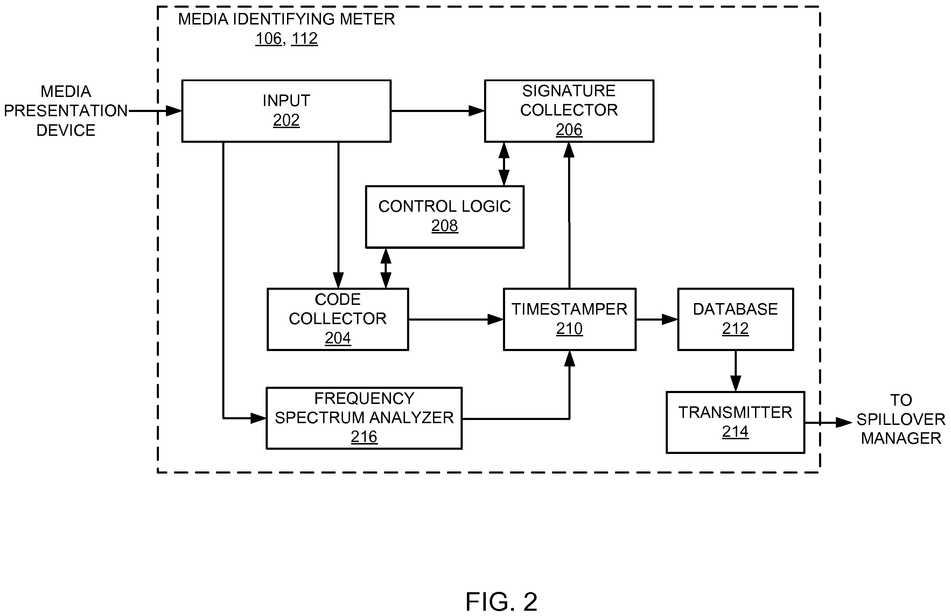

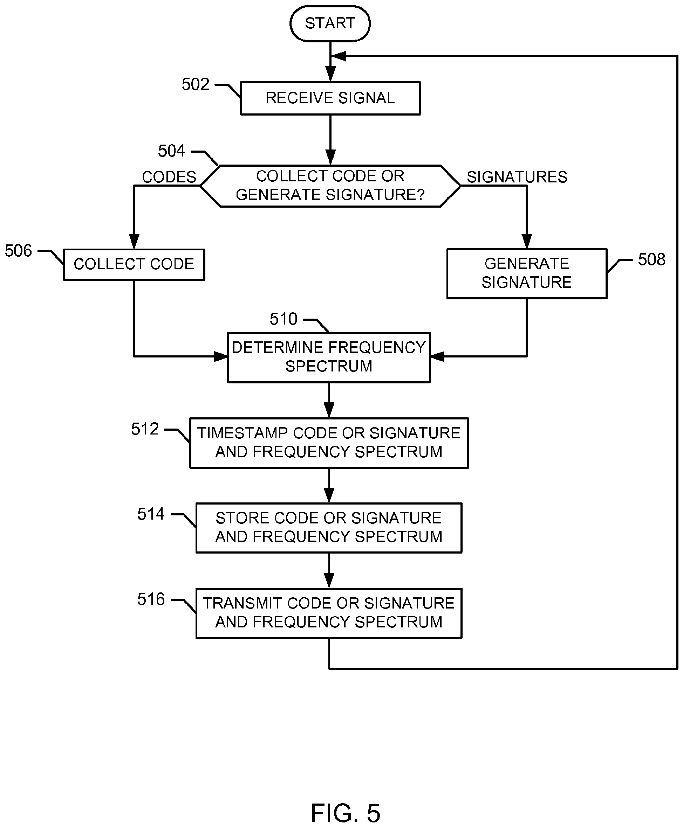

FIG. 5 is a flow diagram representative of example machine readable instructions that may be executed to implement the example media identifying meter of FIGS. 1 and/or 2.

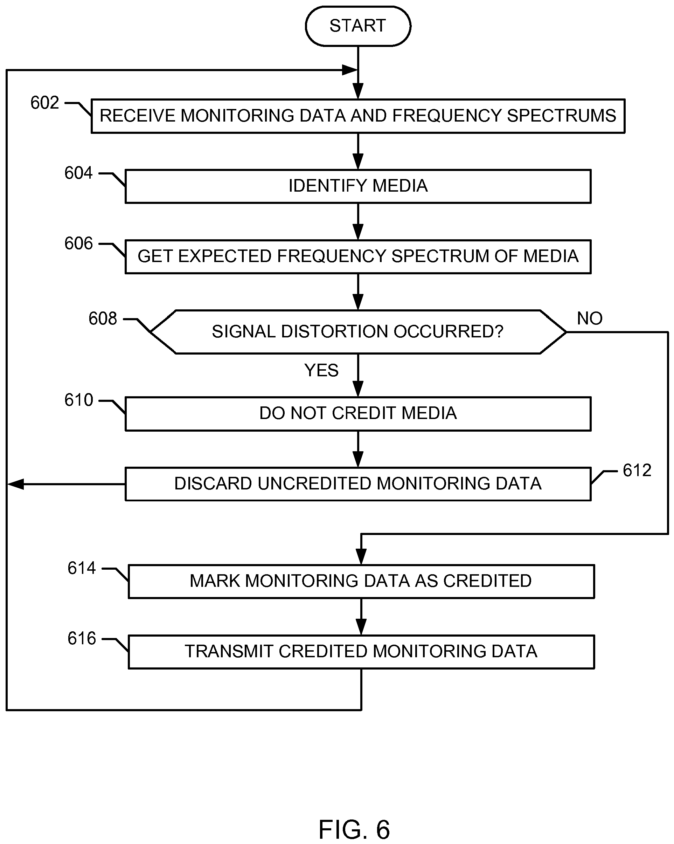

FIG. 6 is another flow diagram representative of example machine readable instructions that may be executed to implement the example spillover manager of FIGS. 1 and/or 3.

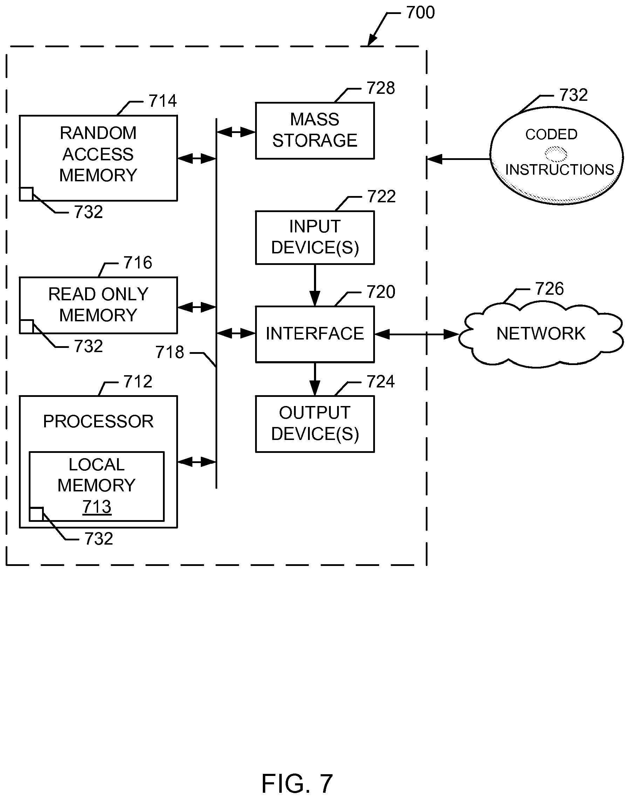

FIG. 7 is a block diagram of an example processor platform that may be used to execute the instructions of FIGS. 4, 5, and/or 6 to implement the example media identifying meter 106 of FIG. 2, the example spillover manager of FIG. 3A, and/or, more generally, the example system of FIG. 1.

### DETAILED DESCRIPTION

Audience measurement companies enlist persons to participate in measurement panels. Such persons (e.g., panelists) agree to allow the audience measurement company to measure their exposure to media (e.g., television programming, radio programming, Internet, advertising, signage, outdoor advertising, etc.). In order to associate media monitoring data (i.e., data reflecting media presentation) with panelist demographics, the audience measurement company monitors media device(s) and/or panelist(s) using meters.

In some examples, meters (e.g., stationary meters) are placed with and/or near media presentation devices (e.g., televisions, stereos, speakers, computers, etc.) within a home or household. For example, a meter may be placed in a room with a television and another meter may be placed in a different room with another television. In some examples, personal portable metering devices (PPMs), which are also known as portable metering devices or portable personal (or people) meters, are used to monitor media exposure of panelists. A PPM is an electronic device that is typically worn (e.g., clipped to a belt or other apparel) or carried by a panelist. The term "meter" as used herein refers generally to stationary meters and/or portable meters.

In general, media identifying meters are configured to use a variety of techniques to monitor media presentations at media presentation devices and/or exposure of panelists to media presentations. For example, one technique for monitoring media exposure involves detecting or collecting media identifying information (e.g.,

codes (e.g., watermarks), signatures, etc.) from media signals (e.g., audio and/or video signals) that are emitted or presented by media presentation devices.

As media (e.g., content and/or advertisements) is presented, a media identifying meter may receive media signals (e.g., via a microphone) associated with the media and may detect media (e.g., audio and/or video) information associated with the media to generate media monitoring data. In general, media monitoring data may include any information that is representative of (or associated with) media and/or that may be used to identify a particular media presentation (e.g., a song, a television program, a movie, a video game, an advertisement, etc.). For example, the media monitoring data may include signatures that are collected or generated by the media identifying meter based on the media, audio codes that are broadcast simultaneously with (e.g., embedded in) the media, etc. Each media identifying meter may receive different media signals based on the media presented (e.g., tuned) on the media presentation devices to which panelists are exposed.

Media monitoring systems may also include one or more people meters to identify panelists in a monitored audience. Identifying the panelists in the audience allows mapping of their demographics to the media. Panelists provide their demographic information when they agree to be monitored by the audience measurement system. Any method of people metering may be employed. For example, the people metering may be active in that it requires panelists to self-identify by, for instance, entering an identifier corresponding to their name, or it may be passive in that electronics (e.g., video cameras) may be used to identify and/or count persons in the audience. See U.S. Patent 7,609,853 for an example people metering solution.

A panelist home may present unique monitoring challenges to the media identifying meters. For example, a panelist home often includes multiple media presentation devices, each configured to present media to specific viewing and/or listening areas located within the home. Known media identifying meters that are located in one of the viewing and/or listening areas are typically configured to detect any media being presented in the viewing and/or listening area and to credit the media as having been presented. Thus, known media identifying meters operate on the premise that any media detected by the media identifying meter is media that was presented in that particular viewing and/or listening area. However, in some cases, a media identifying meter may detect media that is emitted by a media presentation device that is not located within the viewing or listening proximity of a panelist in the room with the media identifying meter thereby causing the detected media to be improperly credited to the panelist currently associated with the monitored area (via, for example, a people meter). The ability of the media identifying meter to detect media being presented outside of the viewing and/or listening proximity of the panelist is referred to as "spillover" because the media being presented outside of the viewing and/or listening proximity of the panelist is "spilling over" into the area occupied by the media identifying meter and may not actually fall within the attention of the panelist. Spillover may occur, for example, when a television in a particular room is powered off, but a media identifying meter associated with that television detects media being presented on a media presentation device in a different room of the panelist home or of an adjacent home (e.g., a neighbor's condominium or apartment). In such an example, the media identifying meter improperly credits the media as being presented on the media presentation device it monitors even though no such presentation occurred.

Another effect, referred to as "hijacking," occurs when a media identifying meter detects different media being presented at multiple media presentation devices at the same time. For example, a media identifying meter in a kitchen may detect a particular media program being presented on a media presentation device in the kitchen, but the media identifying meter may also detect a different media program that is being presented on a different media presentation device in a living room. In such an example, the media presented by the media presentation device in the living room may, in some cases, have signals that overpower or "hijack" the signals associated with the media being presented by the media presentation device in the kitchen. As a result, the media identifying meter in the kitchen may inaccurately credit the media being presented in the living room and fail to credit the media being presented in the kitchen. In some examples, other difficulties such as varying volume levels, varying audio/video content type (e.g., sparse, medium, rich, etc.), varying household transmission characteristics due to open/closed doors, movement and/or placement of furniture, acoustic characteristics of room layouts, wall construction, floor coverings, ceiling heights, etc. may exacerbate these issues and, thus, lead to inaccurate media presentation detection by media identifying meters.

Example methods and systems disclosed herein may be used to manage audio spillover and/or other sources of media monitoring inaccuracies in the course of presentations of media to more accurately assess the exposure of panelists to that media. Example methods and systems may be used to prevent audio spillover from adversely affecting results of media monitoring. Some example methods and systems analyze media monitoring data to determine if audio spillover has occurred. In some such examples, if audio spillover has not occurred, the media is credited as actual media exposure (e.g., a panelist has been exposed to the media). If audio spillover has occurred, the media is not credited as an actual media exposure.

Example methods and systems disclosed herein detect signal spillover by analyzing signal distortion associated with media presentations (e.g., signal distortion of audio signal waveforms representative of media presentations). Particular media presentations (e.g., signals representative of particular media content and/or advertisements) have particular frequency spectrums associated with them (e.g., a particular frequency spectrum may be expected from a particular media presentation). A frequency spectrum expected from a particular media presentation is referred to herein as an expected frequency spectrum. In some examples, a media identifying meter monitoring a media presentation from a proximate media presentation device may analyze a waveform of the media presentation and determine an actual frequency spectrum of the waveform. In some examples, the actual frequency spectrum and/or data representative thereof is compared to the expected frequency spectrum and/or data representative thereof to determine if spillover has occurred. For example, the actual frequency spectrum may be different from the expected frequency spectrum when the audio has traveled a larger distance than expected between the media identifying meter and the media presentation device it monitors, the audio has been transmitted through different rooms (e.g., the signal has bounced off of walls, traveled through a wall, a ceiling, or a floor, etc.), etc. If the actual frequency spectrum is similar to the expected frequency spectrum (e.g., the signal has not been distorted beyond a threshold representation of spillover), it is determined that spillover has not occurred. If the actual frequency spectrum is not similar to the expected frequency spectrum (e.g., the signal has been distorted beyond a threshold representation of spillover), it is determined that spillover has occurred. In some examples, when it is determined that spillover has occurred, the media presentation is not credited as an actual media exposure.

An example method disclosed herein includes identifying media based on media monitoring data. The media monitoring data is received from a first media identifying meter associated with a first media presentation device. The example method includes identifying an expected frequency spectrum associated with the media. The example method includes comparing the expected frequency spectrum to an actual frequency spectrum collected from the media by the first meter to determine if spillover occurred. The example method includes crediting the media as a media exposure if spillover did not occur.

An example spillover manager disclosed herein includes a frequency spectrum comparator to identify an expected frequency spectrum for media associated with media monitoring data received from a meter associated with a media presentation device. The example frequency spectrum comparator is to compare the expected frequency spectrum to an actual frequency spectrum to determine if spillover occurred. The actual frequency spectrum is based on a sample of the media collected by the meter. The example spillover manager includes a media creditor to credit the media with an exposure if spillover did not occur and to not credit the media with an exposure if spillover did occur.

An example tangible computer readable storage medium disclosed herein comprises instructions that, when executed, cause a computing device to identify media associated with media monitoring data. The media monitoring data is received from a first meter associated with a first media presentation device. The example instructions cause the computing device to identify an expected frequency spectrum associated with the media. The example instructions cause the computing device to compare the expected frequency spectrum to an actual frequency spectrum collected from the media by the first meter to determine if spillover occurred. The example instructions cause the computing device to credit the media as a media exposure if spillover did not occur.

FIG. 1 illustrates an example media monitoring system 100 in an example environment of use. The example of FIG. 1 includes an example spillover manager 102 implemented in accordance with the teachings of this disclosure to manage spillover to reduce (e.g., prevent) media monitoring inaccuracies in the media monitoring system 100. In the illustrated example, a first media identifying meter 106 monitors media presented by a first media presentation device 108 in a first room 110 and a second media identifying meter 112 monitors media presented on a second media presentation device 114 in a second room 116. Either or both of the first and second media presentation devices 108, 114 may be, for example, a television, a radio, a computer, a stereo system, a DVD player, a game console, etc. Media may include, for example, any form of content, television programming, radio programming, movies, songs, any form of advertisements, Internet information such as websites and/or streaming media, and/or any other video information, audio information, still image information, and/or computer information to which a panelist (e.g., an example panelist 118) may be exposed. While two rooms 110, 116, two media presentation devices 108, 114, and two media identifying meters 106, 112 are shown in the example of FIG. 1, any number and/or type(s) of rooms, any number and/or type(s) of media presentation devices, and/or any number and/or type(s) of meters (including, for example, people meters) in any configuration and/or spatial relationship may be implemented in the example system 100.

In the illustrated example, to respectively monitor media presented on the first and second media presentation devices 108, 114, the first and second media identifying meters 106, 112 process media signals (or portions thereof such as audio portions of the media signals) respectively output by the first and second media presentation devices 108, 114 to extract codes and/or metadata, and/or to generate signatures for use in identifying the media and/or a station (e.g., a broadcaster) originating the media. The first media identifying meter 106 of the illustrated example is intended to monitor the first media presentation device 108 and to not monitor the second media presentation device 114. The second media identifying meter 112 is intended to monitor the second media presentation device 114 and to not monitor the first media presentation device 108.

Identification codes, such as watermarks, ancillary codes, etc. may be embedded within or otherwise transmitted with media signals. Identification codes are data that are inserted into media (e.g., audio or video) to uniquely identify broadcasters and/or media (e.g., content or advertisements), and/or are carried with the media for another purpose such as tuning (e.g., packet identifier headers ("PIDs") used for digital broadcasting). Codes are typically extracted using a decoding operation.

Signatures are a representation of one or more characteristic(s) of the media signal (e.g., a characteristic of the frequency spectrum of the signal). Signatures can be thought of as fingerprints. They are typically not dependent upon insertion of identification codes in the media, but instead preferably reflect an inherent characteristic of the media and/or the media signal. Systems to utilize codes and/or signatures for audience measurement are long known. See, for example, Thomas, U.S. Patent No. 5,481,294. Codes, metadata, signatures, channel identifiers (e.g., tuned channel numbers), etc. collected and/or generated by the first or second media identifying meters 106, 112 for use in identifying media and/or a station transmitting media may be referred to generally as "media monitoring data."

In the illustrated example, media monitoring data collected by the first media identifying meter 106 and/or the second media identifying meter 112 is transferred to the home processing system 104 for further processing. The first and second media identifying meters 106, 112 may be communicatively coupled with the home processing system 104 via wireless and/or hardwired communications and may periodically and/or aperiodically communicate collected media monitoring information to the home processing system 104. People meters 128, 130 may likewise be communicatively coupled with the home processing system 104 to periodically and/or aperiodically forward people identification data to the home processing system 104.

In the illustrated example, the home processing system 104 is communicatively coupled to a remotely located central data collection facility 120 via a network 122. The example home processing system 104 of FIG. 1 transfers collected media monitoring data to the central facility 120 for further processing. The central facility 120 of the illustrated example collects and/or stores, for example, media monitoring data that is collected by multiple media monitoring devices such as, for example, the media identifying meters 106, 112, and/or demographic information that is collected by people meters, located at multiple panelist locations. The central facility 120 may be, for example, a facility associated with an audience measurement entity such as The Nielsen Company (US), LLC or any affiliate of The Nielsen Company (US), LLC. The central facility 120 of the illustrated example includes a server 124 and a database 126 that may be implemented using any suitable processor, memory and/or data storage apparatus such as that shown in FIG. 7. In some examples, the home processing system 104 is located in the central facility 120.

The network 122 of the illustrated example is used to communicate information and/or data between the example home processing system 104 and the central facility 120. The network 122 may be implemented using any type(s) of public and/or private network(s) such as, but not limited to, the Internet, a telephone network, a cellular network, a local area network ("LAN"), a cable network, and/or a wireless network. To enable communication via the network 122, the home processing system 104 of the illustrated example includes a communication interface that enables connection to an Ethernet, a digital subscriber line ("DSL"), a telephone line, a coaxial cable, and/or any wireless connection, etc.

Some known methods for measuring media exposure or presentation track or log media presentations to which a panelist is exposed and award a media exposure credit to a media presentation whenever the panelist is in the vicinity of that media presentation. However, some such methods may produce inconsistent or inaccurate monitoring results due to spillover that occurs. For example, within the example environment illustrated in FIG. 1, spillover may occur when the first media presentation device 108 is powered off (e.g., is not presenting media), but the first media identifying meter 106 associated with the first media presentation device 108 detects media being presented by the second media presentation device 114. In such an example, the first media identifying meter 106 will incorrectly credit the media presented at the second media presentation device 114 as being presented to the panelist 118. Recording media data that has spilled over from another space (e.g., the room 116) may result in an inaccurate representation of the media presented to the panelist 118. In some such examples, the panelist 118 may not even know or be aware of the media, but the electronics of the media identifying meter 106 may still be sensitive enough to detect a code in the media presented by the second media presentation device 114.

The spillover manager 102 of the illustrated example is used to manage spillover to reduce (e.g., prevent) media monitoring inaccuracies in the example system 100 of FIG. 1. The example spillover manager 102 of FIG. 1 receives media monitoring data from the first example media identifying meter 106 and/or the second example media identifying meter 112 and analyzes the media monitoring data to determine if spillover has occurred. In the illustrated example, if the example spillover manager 102 detects spillover associated with the first media identifying meter 106 and/or the second media identifying meter 112, the media identified in the media monitoring data is not credited as actual media exposure for the meter/monitored media presentation device that experienced the spillover and the media monitoring data associated with the uncredited media is discarded and/or marked as invalid. In the illustrated example, if the example spillover manager 102 does not detect spillover associated with the first media identifying meter 106 and/or the second media identifying meter 112, the media identified in the media monitoring data is credited as actual media exposure(s). In the illustrated example, the spillover manager 102 sends media monitoring data associated with credited media to the example central facility 120. In some examples, the spillover manager 102 labels portion(s) of the media monitoring data as either associated with credited or uncredited media and sends the identified media monitoring data to the example central facility 120.

In the illustrated example, the spillover manager 102 detects spillover by detecting signal distortion associated with media presentations. The spillover manager 102 of the illustrated example detects signal distortion by analyzing frequency spectrums associated with media presentations (e.g., frequency spectrums of audio signal waveforms representative of media presentations). A frequency spectrum is a representation of an audio signal in the frequency domain. Particular media presentations (e.g., particular content and/or advertisements) have particular expected frequency spectrums associated with them (e.g., a particular frequency spectrum may be expected from a particular media presentation when the media is received in the same room in which the media presentation device resides). A frequency spectrum expected from a particular media presentation may be referred to as an expected frequency spectrum. The spillover manager 102 of the illustrated example stores and/or accesses (e.g., from the central facility 120) expected frequency spectrums and/or data representative thereof for use in spillover detection. Expected frequency spectrums may be determined during, for example, a training period where frequency spectrums for particular media presentations are gathered and analyzed for use in spillover detection. Alternatively, expected frequency spectrums may be collected by the entity associated with the central facility and stored in association with an identifier of the media (e.g., a code or a signature) to enable lookup of the same. In some examples, an expected frequency spectrum serves as a signature of the corresponding media.

In the illustrated example, the first and second media identifying meters 106, 112 receive media signals (e.g., audio) associated with media presentations (e.g., via microphones). In the illustrated example, in addition to collecting media monitoring data from the received media signals, the example first and second media identifying meters 106, 112 analyze audio waveforms of the media signals and determine or calculate frequency spectrums of the audio waveforms. The frequency spectrums and/or data representative thereof (e.g., frequency spectrum data) calculated by the example first and second media identifying meters 106, 112 are referred to as "actual frequency spectrums" because they represent the frequency spectrums of the audio waveforms after they have been presented on the first or second media presentation devices 108, 114 and received at the corresponding first and second media identifying meters 106, 112. The first and second media identifying meters 106, 112 of the illustrated example timestamp the media monitoring data and the actual frequency spectrum data and send the timestamped media monitoring data and actual frequency spectrum data to the example spillover manager 102 for analysis. In some examples, the frequency spectrum data is not generated at the media identifying meters 106, 112, but instead is generated at the spillover manager 102.

The spillover manager 102 of the illustrated example uses the media monitoring data to identify the media presented at the first and/or second media presentation device 108, 114. Once the media is identified, the spillover manager 102 of the illustrated example finds the expected frequency spectrum for that media (e.g., by using an identifier of the identified media to access a table storing the expected frequency spectrums). To determine if spillover occurred, the spillover manager 102 of the illustrated example compares the expected frequency spectrum (or data representative thereof) for the identified media to the actual frequency spectrum (or data representative thereof) generated based on the data collected by the example first and/or second media identifying meter 106, 112. If the actual frequency spectrum is sufficiently similar to the expected frequency spectrum (e.g., the signal was not distorted), the example spillover manager 102 determines that spillover did not occur for the corresponding media identification event. Thus, the person(s) (e.g., the panelist 118) identified as present by a first people meter 128 associated with the corresponding media identifying meter that collected the data (e.g., the first media identifying meter 106/first media presentation device 108 or a second people meter 130 associated with the second media identifying meter 112/second media presentation device 114) are credited as having been exposed to the media. If the actual frequency spectrum is not sufficiently similar to the expected frequency spectrum (e.g., the signal was distorted), the example spillover manager 102 determines that spillover occurred for the corresponding media identification event. Thus, the persons (e.g., the panelist 118) identified as present by the corresponding people meter (e.g., the first people meter 128 or the second people meter 130) are not credited as having been exposed to the media. In other words, when the example spillover manager 102 of FIG. 1 determines that spillover has occurred, the media is not credited as actual media exposure at the corresponding media presentation device (e.g., media presentation devices 108, 114).

For example, when the first example media identifying meter 106 receives a media signal, it determines an actual frequency spectrum for the received media signal, in addition to collecting media monitoring data for the received media signal. In such an example, the first media identifying meter 106 sends the actual frequency spectrum and/or data representative thereof and the media monitoring data to the example spillover manager 102. The example spillover manager 102 identifies the media (e.g., content or advertisement) from the media monitoring data and accesses (e.g., looks up in a local database or cache, retrieves from a remote database such as a database at the central facility 120) an expected frequency spectrum associated with that media (i.e., the media identified by the media monitoring data). If the actual frequency spectrum is similar to the expected frequency spectrum, the example spillover manager 102 assumes the media was presented on the first example media presentation device 108 corresponding to the first media identifying meter 106 (i.e., the media identifying meter that provided the media monitoring data under analysis) and credits the media as an actual media exposure at the corresponding media presentation device. Thus, the person(s) identified as present by the first people meter 128 (e.g., the panelist 118) are credited as having been exposed to the media. If the actual frequency spectrum is not similar to the expected frequency spectrum, the example spillover manager 102 assumes the media was not presented on the example media presentation device 108 (e.g., the media was presented on the media presentation device 114 and the media signal spilled over to the example media identifying meter 106), and does not credit the media as an actual media exposure (e.g., does not credit the media with exposure to the panelist 118).

While the spillover manager 102 of the illustrated example is shown within the example home processing system 104, the spillover manager 102 may be implemented at the first media identifying meter 106, the second media identifying meter 112, and/or at the central facility 120.

FIG. 2 is a block diagram of an example implementation of the first and/or second media identifying meters 106, 112 of FIG. 1. The media identifying meter 106, 112 of the illustrated example receives media signals (e.g., audio signals) from one or more media presentation devices (e.g., the first or second media presentation device 108, 114 of FIG. 1). In the illustrated example, the media identifying meter 106, 112 is used to collect media monitoring data (e.g., to extract and/or analyze codes and/or signatures from media signals output by a corresponding media presentation device 108, 114) and is used to determine frequency spectrums of the media signals. Thus, the media identifying meter 106, 112 of the illustrated example is used to collect, aggregate, locally process, and/or transfer media monitoring data and/or frequency spectrum data (e.g., data representative of determined frequency spectrums) to the spillover manager 102 of FIG. 1. The media identifying meter 106, 112 of the illustrated example includes an example input 202, an example code collector 204, an example signature generator 206, example control logic 208, an example timestamper 210, an example database 212, an example transmitter 214, and an example frequency spectrum analyzer 216.

In the illustrated example, the input 202 is a microphone exposed to ambient sound and serves to collect audio signals output by monitored media presentation devices (e.g., the media presentation device 108). To collect media monitoring data associated with the audio signals, the input 202 of the illustrated example passes a received audio signal to the code collector 204 and/or the signature generator 206. The code collector 204 of the illustrated example extracts codes and/or the signature generator 206 generates signatures from the signal to identify broadcasters, channels, stations, and/or programs. The control logic 208 of the illustrated example is used to control the code collector 204 and/or the signature generator 206 to cause collection of a code, a signature, or both a code and a signature. The identified codes and/or signatures (e.g., the media monitoring data) are timestamped at the example timestamper 210, are stored in the example database 212, and are transmitted by the example transmitter 214 to the spillover manager 102 at the home processing system 104. Although the example of FIG. 2 collects codes and/or signatures from audio signals, codes or signatures can additionally or alternatively be collected from other portion(s) of the signal (e.g., from the video portion).

The input 202 of the illustrated example also passes the received audio signal to the example frequency spectrum analyzer 216. The frequency spectrum analyzer 216 of the illustrated example analyzes the received audio signal and determines a frequency spectrum of the received audio signal. A frequency spectrum is a representation of the received audio signal in the frequency domain. The example input 202 may collect an audio signal for a period of time (e.g., ten seconds, one minute, five minutes, ten minutes, etc.) to enable the example frequency spectrum analyzer 216 to analyze the received audio signal and determine the frequency spectrum of the received audio signals. In some examples, the frequency spectrum analyzer 216 detects events (e.g., percussive events) that may be represented in the audio signals collected via the example input 202. For example, events that are unrelated to media presentations (e.g., dogs barking, doors slamming, etc.) may be picked up by the example input 202 and the frequency spectrum analyzer 216 may detect such events in the audio signals and remove representations of such events from the audio signals prior to and/or during determination of the frequency spectrums of the audio signals.

The frequency spectrum determined by the example frequency spectrum analyzer 216 is referred to as the actual frequency spectrum. The actual frequency spectrum and/or data representative thereof is timestamped at the example timestamper 210, stored at the example database 212, and transmitted by the example transmitter 214 to the example spillover manager 102 with the media monitoring data.

While an example manner of implementing the media identifying meter 106, 112 of FIG. 1 is illustrated in FIG. 2, one or more of the elements, processes and/or devices illustrated in FIG. 2 may be combined, divided, re-arranged, omitted, eliminated and/or implemented in any other way. Further, the example input 202, the example code collector 204, the example signature collector 206, the example control logic 208, the example timestamper 210, the example database 212, the example transmitter 214, the example frequency spectrum analyzer 216, and/or, more generally, the example media identifying meter 106, 112 of FIG. 1 may be implemented by hardware, software, firmware and/or any combination of hardware, software and/or firmware. Thus, for example, any of the example input 202, the example code collector 204, the example signature collector 206, the example control logic 208, the example timestamper 210, the example database 212, the example transmitter 214, the example frequency spectrum analyzer 216, and/or, more generally, the example media identifying meter 106, 112 could be implemented by one or more circuit(s), programmable processor(s), application specific integrated circuit(s) (ASIC(s)), programmable logic device(s) (PLD(s)) and/or field programmable logic device(s) (FPLD(s)), etc. When reading any of the apparatus or system claims of this patent to cover a purely software and/or firmware implementation, at least one of the example input 202, the example code collector 204, the example signature collector 206, the example control logic 208, the example timestamper 210, the example database 212, the example transmitter 214, the example frequency spectrum analyzer 216, and/or the example media identifying meter 106, 112 are hereby expressly defined to include a tangible computer readable storage device or storage disc such as a memory, DVD, CD, Blu-ray, etc. storing the software and/or firmware. Further still, the example media identifying meter 106, 112 of FIG. 1 may include one or more elements, processes and/or devices in addition to, or instead of, those illustrated in FIG. 2, and/or may include more than one of any or all of the illustrated elements, processes and devices.

FIG. 3A is a block diagram of an example implementation of the spillover manager 102 of FIG. 1. The spillover manager 102 of the illustrated example receives media monitoring data and actual frequency spectrums (and/or data representative thereof) corresponding to the actual frequency spectrum from one or more media identifying meter(s) (e.g., the media identifying meters 106, 112 of FIG. 1). In the illustrated example, the spillover manager 102 uses the media monitoring data and the actual frequency spectrum data to determine whether spillover occurred (e.g., in the example system 100 of FIG. 1) and whether identified media programs are to be credited with actual exposure to a panelist. The spillover manager 102 of the illustrated example is used to transfer credited media monitoring data (e.g., media monitoring data associated with credited media programs) to the central facility 120 of FIG. 1. The spillover manager 102 of the illustrated example includes an example frequency spectrum comparator 302, an example frequency spectrum database 304, an example media creditor 306, and an example transmitter 308.

The frequency spectrum comparator 302 of the illustrated example receives media monitoring data and actual frequency spectrum data from the media identifying meter(s) (e.g., the first and second media identifying meters 106, 112 of FIG. 1). The frequency spectrum comparator 302 of the illustrated example uses the example frequency spectrum database 304 to identify media (e.g., media that was presented by the first or second media presentation device 108, 114) based on the media monitoring data and to identify an expected frequency spectrum associated with the identified media. Particular media programs are identified in the example frequency spectrum database 304 using the media monitoring data (e.g., using codes and/or signatures associated with the media). The frequency spectrum database 304 of the illustrated example stores media identifiers (e.g., identifiers of different media programs) along with expected frequency spectrums and/or data representative thereof associated with the media. For example, for each particular media program, the example frequency spectrum database 304 stores an expected frequency spectrum. Expected frequency spectrums may be calculated and/or determined at, for example, a central facility (e.g., the central facility 120 of FIG. 1) prior to implementation of the example spillover manager 102 in the example system 100 of FIG. 1 and/or the spillover manager 102 may be implemented at the central facility 120 to process data collected from various meters. Additionally or alternatively, the frequency spectrum database 304 may be located at the central facility and the spillover manager 102 may query the database 304 via the network 122.

Once the frequency spectrum comparator 302 obtains the expected frequency spectrum associated with the media, the frequency spectrum comparator 302 of the illustrated example compares the expected frequency spectrum to the actual frequency spectrum (e.g., the actual frequency spectrum received from the media identifying meter(s) for the media under analysis). An example expected frequency spectrum 301 is illustrated in FIG. 3B and a corresponding example actual frequency spectrum 303 is illustrated in FIG. 3C. Both the expected frequency spectrum 301 and the actual frequency spectrum 303 of the illustrated examples are associated with the same particular media.

If the actual frequency spectrum is sufficiently similar to the expected frequency spectrum (e.g., if the signal was not distorted more than a predetermined amount), the frequency spectrum comparator 302 of the illustrated example determines spillover did not occur and instructs the example media creditor 306 to credit the media as an actual media exposure. If the actual frequency spectrum is not sufficiently similar to the expected frequency spectrum (e.g., if the signal was distorted beyond a predetermined amount), the frequency spectrum comparator 302 of the illustrated example determines that spillover did occur and instructs the example media creditor 306 to not credit the media as an actual media exposure.

In some examples, the frequency spectrum comparator 302 determines that the signal was distorted when the actual frequency spectrum was altered when compared with the expected frequency spectrum. In some examples, the frequency spectrum comparator 302 determines that the signal was distorted when the actual frequency spectrum (e.g., the actual frequency spectrum 303 of FIG. 3C) does not include or includes fewer high frequency elements than the expected frequency spectrum (e.g., the expected frequency spectrum 301 of FIG. 3B). In some examples, the frequency spectrum comparator 302 determines that the signal is distorted when the actual frequency spectrum does not include or includes fewer mid-frequency elements than the expected frequency spectrum.

In some examples, to determine if the actual frequency spectrum is sufficiently similar to the expected frequency spectrum to conclude spillover did not occur, the example frequency spectrum comparator 302 calculates a summation of the absolute values of the differences between amplitudes of corresponding frequency components of the actual frequency spectrum (e.g., amplitudes 307 of the frequency spectrum 303 of FIG. 3C) and the expected frequency spectrum (e.g., amplitudes 305 of the frequency spectrum 301 of FIG. 3B). In such an example, the example frequency spectrum comparator 302 compares the summation of the absolute values of the differences between the amplitudes to a threshold. If the summation of the absolute values of the differences between the amplitudes is larger than the threshold, the example frequency spectrum comparator 302 determines that the actual frequency spectrum is not sufficiently similar to the expected frequency spectrum for the signal to have originated in the same room as the meter that logged the media and, thus, that spillover did occur. If the summation of the absolute values of the differences between the amplitudes is not larger than the threshold, the example frequency spectrum comparator 302 determines that the actual frequency spectrum is sufficiently similar to the expected frequency spectrum to conclude the signal originated from the media presentation device in the same room as the meter that detected the media and, thus, that spillover did not occur. An example equation to compare a summation of the absolute values of the differences between amplitudes of corresponding frequency components of the actual frequency spectrum and the expected frequency spectrum to a threshold is illustrated below. In the illustrated equation, $f_{N_A}$ represents a frequency component of the actual frequency spectrum, $f_{N_E}$ is the corresponding frequency component of the expected frequency spectrum, and T is the threshold.

$$\sum_{0}^{N} | f_{N_A} - f_{N_E} | < T$$

The media creditor 306 of the illustrated example credits/does not credit media as actual media exposure based on the output of the example frequency spectrum comparator 302. If the example frequency spectrum comparator 302 determines that spillover did not occur, the media creditor 306 of the illustrated example marks the media monitoring data associated with the media as credited. If the example frequency spectrum comparator 302 determines that spillover did occur, the media creditor 306 of the illustrated example discards the media monitoring data associated with the media. In some examples, rather than discarding the media monitoring data associated with the media that is not credited, the example media creditor 306 marks the media monitoring data associated with the media as uncredited.

The transmitter 308 of the illustrated example transmits the credited media monitoring data to a central facility (e.g., the central facility 120 of FIG. 1) for further processing. In some examples, where the example media creditor 306 does not discard the uncredited media monitoring data, the example transmitter 308 transmits the credited media monitoring data and the uncredited media monitoring data to the central facility 120 for further processing.

While an example manner of implementing the spillover manager 102 of FIG. 1 is illustrated in FIG. 3A, one or more of the elements, processes and/or devices illustrated in FIG. 3A may be combined, divided, re-arranged, omitted, eliminated and/or implemented in any other way. Further, the example frequency spectrum comparator 302, the example frequency spectrum database 304, the example media creditor 306, the example transmitter 308, and/or, more generally, the example spillover manager 102 of FIG. 1 may be implemented by hardware, software, firmware and/or any combination of hardware, software and/or firmware. Thus, for example, any of the example frequency spectrum comparator 302, the example frequency spectrum database 304, the example media creditor 306, the example transmitter 308, and/or, more generally, the example spillover manager 102 could be implemented by one or more circuit(s), programmable processor(s), application specific integrated circuit(s) (ASIC(s)), programmable logic device(s) (PLD(s)) and/or field programmable logic device(s) (FPLD(s)), etc. When reading any of the apparatus or system claims of this patent to cover a purely software and/or firmware implementation, at least one of the example frequency spectrum comparator 302, the example frequency spectrum database 304, the example media creditor 306, the example transmitter 308, and/or the example spillover manager 102 are hereby expressly defined to include a tangible computer readable storage device or storage disc such as a memory, DVD, CD, Blu-ray, etc. storing the software and/or firmware. Further still, the example spillover manager 102 of FIG. 1 may include one or more elements, processes and/or devices in addition to, or instead of, those illustrated in FIG. 3A, and/or may include more than one of any or all of the illustrated elements, processes and devices.

Flowcharts representative of example machine readable instructions for implementing the media identifying meter 106, 112 of FIGS. 1 and 2 and the spillover manager 102 of FIGS. 1 and 3 are shown in FIGS. 4, 5, and 6. In this example, the machine readable instructions comprise a program for execution by a processor such as the processor 712 shown in the example processor platform 700 discussed below in connection with FIG. 7. The program may be embodied in software stored on a tangible computer readable storage medium such as a CD-ROM, a floppy disk, a hard drive, a digital versatile disk (DVD), a Blu-ray disk, or a memory associated with the processor 712, but the entire program and/or parts thereof could alternatively be executed by a device other than the processor 712 and/or embodied in firmware or dedicated hardware. Further, although the example program is described with reference to the flowcharts illustrated in FIGS. 4, 5, and 6, many other methods of implementing the example media identifying meter 106, 112 and the example spillover manager 102 may alternatively be used. For example, the order of execution of the blocks may be changed, and/or some of the blocks described may be changed, eliminated, or combined.

As mentioned above, the example processes of FIGS. 4, 5, and 6 may be implemented using coded instructions (e.g., computer and/or machine readable instructions) stored on a tangible computer readable storage medium such as a hard disk drive, a flash memory, a read-only memory (ROM), a compact disk (CD), a digital versatile disk (DVD), a cache, a random-access memory (RAM) and/or any other storage device or storage disk in which information is stored for any duration (e.g., for extended time periods, permanently, for brief instances, for temporarily buffering, and/or for caching of the information). As used herein, the term tangible computer readable storage medium is expressly defined to include any type of computer readable storage device and/or storage disk and to exclude propagating signals. As used herein, "tangible computer readable storage medium" and "tangible machine readable storage medium" are used interchangeably. Additionally or alternatively, the example processes of FIGS. 4, 5, and 6 may be implemented using coded instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable device or disc and to exclude propagating signals. As used herein, when the phrase "at least" is used as the transition term in a preamble of a claim, it is open-ended in the same manner as the term "comprising" is open ended.

FIG. 4 is a flow diagram representative of example machine readable instructions that may be executed to implement the example spillover manager 102 of FIG. 1 to manage audio spillover in the example system 100 of FIG. 1. The spillover manager 102 of the illustrated example is used to manage spillover to reduce (e.g., prevent) media monitoring inaccuracies in the system 100.

The example spillover manager 102 determines if media monitoring data has been received (block 402). The example spillover manager 102 is to receive media monitoring data from one or more media identifying meter(s) (e.g., the first and/or second media identifying meters 106, 112 of FIG. 1). The media monitoring data is representative of media that has been presented on one or more media presentation device(s) (e.g., the first and/or second media presentation devices 108, 114 of FIG. 1). Control remains at block 402 until media monitoring data is received by the example spillover manager 102).

The example spillover manager 102 of the illustrated example analyzes the media monitoring data to determine if spillover has occurred (block 404). An example method to determine if spillover has occurred is described below with reference to FIG. 6. If the example spillover manager 102 detects spillover associated with the first and/or second media identifying meters 106, 112 based on the media monitoring data, the media identified in the media monitoring data is not credited as an actual media exposure (block 406) and the media monitoring data associated with the uncredited media is discarded (block 408). Control then returns to block 402. In some examples, rather than discarding the uncredited media monitoring data, the example spillover manager 102 identifies the media monitoring data as uncredited media and exports the uncredited media monitoring data to a central facility (e.g., the example central facility 120).

If the example spillover manager 102 of the illustrated example does not detect spillover associated with the first and/or the second media identifying meter 106, 112, the media identified in the media monitoring data is credited as an actual media exposure (block 410). The example spillover manager 102 of the illustrated example exports media monitoring data associated with credited media to the example central facility 120 (block 412). Control then returns to block 402 when the instructions are complete.

FIG. 5 is a flow diagram representative of example machine readable instructions that may be executed to implement the example media identifying meter 106, 112 of FIG. 1 to collect media monitoring data and to determine frequency spectrums. In the illustrated example, to collect media monitoring data, the media identifying meter 106, 112 extracts and/or analyzes codes and/or signatures from data and/or signals received from one or more media presentation devices (e.g., the first and/or the second media presentation devices 108, 114 of FIG. 1).

Initially, the example input 202 obtains a signal (e.g., an audio signal) from the one or more media presentation devices (e.g., the first and/or the second media presentation devices 108, 114) (block 502). The example control logic 208 determines whether to collect a code or generate a signature from the signal obtained at the input 202 (block 504). In the illustrated example, either a code is collected or a signature is generated from the signal. In other examples, both a code and a signature are collected and/or generated.

If a code is to be collected, the example code collector 204 collects a code from the signal obtained at the input 202 (block 506). The example code collector 204 passes the collected code(s) to the timestamper 210. If a signature is to be generated, the signature generator 206 generates a signature from the signal obtained at the input 202 (block 508). The example signature generator 206 passes the generated signature(s) to the timestamper 210.

The example frequency spectrum analyzer 216 of the illustrated example determines a frequency spectrum of the signal obtained at the input 202 (block 510). The example frequency spectrum analyzer 216 passes the actual frequency spectrum and/or data representative thereof to the example timestamper 210. The example timestamper 210 timestamps the collected codes and/or generated signatures and the actual frequency spectrums (and/or data representative thereof) (block 512). The example timestamper 210 passes the collected codes and/or generated signatures and the actual frequency spectrums (and/or data representative thereof) to the example database 212. The example database 212 stores the collected codes and/or generated signatures and the actual frequency spectrums (and/or data representative thereof) (block 514). The example transmitter 214 periodically and/or aperiodically transmits the collected codes and/or generated signatures and the actual frequency spectrums (and/or data representative thereof) to the spillover manager 102 of FIG. 1. Control then returns to block 502. In some examples, the media identifying meter 106, 112 collects and timestamps the collected audio data, and periodically or aperiodically exports the timestamped data for analysis by the spillover manager 102 (which may be located at the panelist site or at the central facility). In such examples, blocks 504-510 and 514 are not performed in the media identifying meter 106, 112, and blocks 512 and 516 are modified to operate on the received signal (as opposed to on codes, signatures, and/or frequency spectrums).

FIG. 6 is a flow diagram representative of example machine readable instructions that may be executed to implement the example spillover manager 102 of FIG. 3A to manage audio spillover in the example system 100 of FIG. 1 by analyzing signal distortion based on frequency spectrums. The spillover manager 102 of the illustrated example is used to manage spillover to reduce media monitoring inaccuracies in the system 100.

The example spillover manager 102 receives media monitoring data and actual frequency spectrums (and/or data representative thereof) from one or more media identifying meter(s) (e.g., the first and/or second media identifying meters 106, 112 of FIG. 1) (block 602). The example spillover manager 102 uses the media monitoring data and actual frequency spectrums (and/or data representative thereof) to determine whether spillover occurred (e.g., in the example system 100 of FIG. 1) and whether media is to be credited with an actual media exposure event.

The example frequency spectrum comparator 302 uses the example frequency spectrum database 304 to identify media (e.g., media that was presented at the first and/or the second media presentation device 108, 114) associated with the media monitoring data (block 604) and to identify an expected frequency spectrum associated with the identified media (block 606). Particular media programs are identified in the example frequency spectrum database 304 using the media monitoring data (e.g., using codes and/or signatures associated with the media). The example frequency spectrum database 304 stores media identifiers (e.g., identifiers of different media programs) along with expected frequency spectrums associated with the media.

The example frequency spectrum comparator 302 compares the expected frequency spectrum to the actual frequency spectrum (e.g., the actual frequency spectrum received from the first and/or the second media identifying meter 106, 112) to determine if signal distortion occurred (block 608). The example frequency spectrum comparator 302 determines that signal distortion did occur if the actual frequency spectrum is not sufficiently similar to the expected frequency spectrum. The example frequency spectrum comparator 302 determines that signal distortion did not occur if the actual frequency spectrum is sufficiently similar to the expected frequency spectrum. In some examples, the frequency spectrum comparator 302 determines that the signal was distorted when the actual frequency spectrum was altered by more than a threshold amount when compared with the expected frequency spectrum. In some examples, the frequency spectrum comparator 302 determines that the signal was distorted when the actual frequency spectrum includes fewer high frequency elements than the expected frequency spectrum. In some examples, the frequency spectrum comparator 302 determines that the signal was distorted when the actual frequency spectrum includes fewer mid-frequency elements than the expected frequency spectrum.

In some examples, to determine if signal distortion occurred, the example frequency spectrum comparator 302 calculates a summation of the absolute values of the differences between amplitudes of corresponding frequency components of the actual frequency spectrum and the expected frequency spectrum. In such examples, the example frequency spectrum comparator 302 compares the summation of the absolute values of the differences between the amplitudes to a threshold. If the summation of the absolute values of the differences between the amplitudes is larger than the threshold, the example frequency spectrum comparator 302 determines that signal distortion did occur and, thus, the collected media data is due to spillover. If the summation of the absolute values of the differences between the amplitudes is not larger than the threshold, the example frequency spectrum comparator 302 determines that signal distortion did not occur and, thus, the collected media data is valid (i.e., not due to spillover).

If the actual frequency spectrum is not sufficiently similar to the expected frequency spectrum (e.g., if signal distortion did occur) (block 608), the example frequency spectrum comparator 302 determines that spillover did occur and instructs the example media creditor 306 not to credit the media as an actual media exposure (block 610). If the example frequency spectrum comparator 302 determines that spillover did occur, the example media creditor 306 discards the media monitoring data associated with the media (block 612). Control then returns to block 602. In some examples, rather than discarding the media monitoring data associated with the media that is not credited, the example media creditor 306 marks the media monitoring data associated with the media as uncredited.

If the actual frequency spectrum is similar to the expected frequency spectrum (e.g., signal distortion did not occur) (block 608), the example frequency spectrum comparator 302 determines spillover did not occur and the example media creditor 306 credits the media as an actual media exposure (block 614). In particular, the example media creditor 306 marks the media monitoring data associated with the media as credited (block 614). The example transmitter 308 transmits the credited media monitoring data to a central facility (e.g., the central facility 120 of FIG. 1) for further processing (block 616). In some examples, where the example media creditor 306 does not discard the uncredited media monitoring data, the example transmitter 308 transmits the credited media monitoring data and the uncredited media monitoring data to the central facility 120 for further processing (block 616). Control then returns to block 602 when the instructions are complete.

The credited media monitoring data is combined with the people meter data using timestamps to align the two data sources to match demographics and audience size data to the credited media exposures.

FIG. 7 is a block diagram of an example processor platform 700 capable of executing the instructions of FIGS. 4, 5, and 6 to implement the media identifying meter 106, 112 of FIGS. 1 and 2 and the spillover manager 102 of FIGS. 1 and 3. The processor platform 700 can be, for example, a server, a personal computer, a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, or any other type of computing device.

The processor platform 700 of the illustrated example includes a processor 712. The processor 712 of the illustrated example is hardware. For example, the processor 712 can be implemented by one or more integrated circuits, logic circuits, microprocessors or controllers from any desired family or manufacturer.

The processor 712 of the illustrated example includes a local memory 713 (e.g., a cache). The processor 712 of the illustrated example is in communication with a main memory including a volatile memory 714 and a non-volatile memory 716 via a bus 718. The volatile memory 714 may be implemented by Synchronous Dynamic Random Access Memory (SDRAM), Dynamic Random Access Memory (DRAM), RAMBUS Dynamic Random Access Memory (RDRAM) and/or any other type of random access memory device. The non-volatile memory 716 may be implemented by flash memory and/or any other desired type of memory device. Access to the main memory 714, 716 is controlled by a memory controller.

The processor platform 700 of the illustrated example also includes an interface circuit 720. The interface circuit 720 may be implemented by any type of interface standard, such as an Ethernet interface, a universal serial bus (USB), and/or a PCI express interface.

In the illustrated example, one or more input devices 722 are connected to the interface circuit 720. The input device(s) 722 permit a user to enter data and commands into the processor 712. The input device(s) can be implemented by, for example, an audio sensor, a microphone, a camera (still or video), a keyboard, a button, a mouse, a touchscreen, a trackpad, a trackball, isopoint and/or a voice recognition system.

One or more output devices 724 are also connected to the interface circuit 720 of the illustrated example. The output devices 724 can be implemented, for example, by display devices (e.g., a light emitting diode (LED), an organic light emitting diode (OLED), a liquid crystal display, a cathode ray tube display (CRT), a touchscreen, a tactile output device, a light emitting diode (LED), a printer and/or speakers). The interface circuit 720 of the illustrated example, thus, typically includes a graphics driver card.

The interface circuit 720 of the illustrated example also includes a communication device such as a transmitter, a receiver, a transceiver, a modem and/or network interface card to facilitate exchange of data with external machines (e.g., computing devices of any kind) via a network 726 (e.g., an Ethernet connection, a digital subscriber line (DSL), a telephone line, coaxial cable, a cellular telephone system, etc.).

The processor platform 700 of the illustrated example also includes one or more mass storage devices 728 for storing software and/or data. Examples of such mass storage devices 728 include floppy disk drives, hard drive disks, compact disk drives, Blu-ray disk drives, RAID systems, and digital versatile disk (DVD) drives.

The coded instructions 732 of FIGS. 4, 5, and 6 may be stored in the mass storage device 728, in the volatile memory 714, in the non-volatile memory 716, and/or on a removable tangible computer readable storage medium such as a CD or DVD.

Although certain example methods, apparatus and articles of manufacture have been described herein, the scope of coverage of this patent is not limited thereto. On the contrary, this patent covers all methods, apparatus and articles of manufacture fairly falling within the scope of the claims of this patent.

**Claims**

1. A method to manage spillover in a media measuring system, comprising:

   identifying media detected by a first meter (106) associated with a first media presentation device (108);
   identifying an expected frequency spectrum (301) associated with audio of the media, the expected frequency spectrum (301) stored in a database (126) in association with a media identifier corresponding to the media;
   comparing the expected frequency spectrum (301) to an actual frequency spectrum (303) collected from the media by the first meter (106); and
   crediting the media as a media exposure when spillover is not detected based on the comparison.

2. The method of claim 1, wherein the actual frequency spectrum (303) is a representation of an audio portion of the media in a frequency domain.

3. The method of claim 1, wherein comparing the expected frequency spectrum (301) to the actual frequency spectrum (303) includes determining if an audio of the media was distorted.

4. The method of claim 3, wherein determining if the audio was distorted includes comparing a summation of absolute values of differences between amplitudes of corresponding frequency components of the actual frequency spectrum (303) and the expected frequency spectrum (301) to a threshold.

5. The method of claim 1, further including, when spillover is detected, at least one of not crediting the media with a media exposure or discarding media monitoring data collected by the first meter based on the media.

6. A spillover manager to manage spillover in a media measuring system, comprising:

   a frequency spectrum comparator (302) to:

   identify an expected frequency spectrum (301) associated with audio of media detected by a meter (106) associated a media presentation device (108), the expected frequency spectrum (301) stored in a database in association with a media identifier corresponding to the media; and
   compare the expected frequency spectrum (301) to an actual frequency spectrum (303), the actual frequency spectrum (301) based on a sample of the media detected by the meter (106); and

   a media creditor (306) to:

   credit the media with an exposure when spillover is not detected based on the comparison; and
   not credit the media with an exposure when spillover is detected based on the comparison.

7. The spillover manager of claim 6, wherein the actual frequency spectrum is a representation of an audio portion of the media in a frequency domain.

8. The spillover manager of claim 6, wherein the frequency spectrum comparator (302) is to compare the expected frequency spectrum (301) to the actual frequency spectrum (303) to determine if an audio portion of the media was distorted.

9. The spillover manager of claim 8, wherein to determine if the audio portion of the media was distorted, the frequency spectrum comparator (302) is to compare a summation of absolute values of differences between amplitudes of corresponding frequency components of the actual frequency spectrum (303) and the expected frequency spectrum (301) to a threshold.

10. The spillover manager of claim 6, wherein the media creditor (306) is to, when spillover is detected, at least one of mark media monitoring data corresponding to the media as not credited or discard the media monitoring data.

11. A tangible computer readable storage medium comprising instructions that, when executed, cause a processor to at least:

    identify media detected by a first meter (106) associated with a first media presentation device (108);
    identify an expected frequency spectrum (301) associated with audio of the media, the expected frequency spectrum (301) stored in a database in association with a media identifier corresponding to the media;
compare the expected frequency spectrum (301) to an actual frequency spectrum (303) collected from the media by the first meter; and
credit the media as a media exposure when spillover is not detected based on the comparison.

12. The computer readable medium of claim 11, wherein the actual frequency spectrum (303) is a frequency domain representation of an audio portion of the media in a frequency domain.

13. The computer readable medium of claim 11, wherein comparing the expected frequency spectrum (301) to the actual frequency spectrum (303) includes determining when an audio portion of the media was distorted.

14. The computer readable medium of claim 13, wherein determining if the audio portion of the media was distorted includes comparing a summation of absolute values of differences between amplitudes of corresponding frequency components of the actual frequency spectrum (303) and the expected frequency spectrum (301) to a threshold.

15. The computer readable medium of claim 11, wherein the instructions further cause the processor to discard media monitoring data corresponding to the media when spillover is detected.

**Patentansprüche**

1. Verfahren zum Verwalten von Spillover in einem Medienmesssystem, umfassend:

Identifizieren von Medien, die von einem ersten Messgerät (106) erfasst werden, das mit einer ersten Medienpräsentationsvorrichtung (108) verbunden ist;
Identifizieren eines erwarteten Frequenzspektrums (301), das mit dem Audio des Mediums verbunden ist, wobei das erwartete Frequenzspektrum (301) in einer Datenbank (126) in Verbindung mit einer den Medien entsprechenden Medienkennung gespeichert ist;
Vergleichen des erwarteten Frequenzspektrums (301) mit einem tatsächlichen Frequenzspektrum (303), das von den Medien durch das erste Messgerät (106) erfasst wird; und
Anrechnen der Medien als Medien-Exposition, wenn auf der Grundlage des Vergleichs kein Spillover festgestellt wird.

2. Verfahren nach Anspruch 1, wobei das tatsächliche Frequenzspektrum (303) eine Darstellung eines Audioteils der Medien in einem Frequenzbereich ist.

3. Verfahren nach Anspruch 1, wobei das Vergleichen des erwarteten Frequenzspektrums (301) mit dem tatsächlichen Frequenzspektrum (303) ein Bestimmen einschließt, ob ein Audio der Medien verzerrt wurde.

4. Verfahren nach Anspruch 3, wobei das Bestimmen, ob das Audio verzerrt war, das Vergleichen einer Summe von Absolutwerten von Differenzen zwischen Amplituden von entsprechenden Frequenzkomponenten des tatsächlichen Frequenzspektrums (303) und des erwarteten Frequenzspektrums (301) mit einem Schwellenwert umfasst.

5. Verfahren nach Anspruch 1, ferner umfassend, wenn ein Spillover festgestellt wird, mindestens eines aus dem folgenden: Nichtanrechnen der Medien mit einer Medien-Exposition oder Verwerfen von Medienüberwachungsdaten, die von dem ersten Messgerät auf der Grundlage der Medien erfasst wurden.

6. Spillover-Manager zur Verwaltung von Spillover in einem Medienmesssystem, der Folgendes umfasst:

einen Frequenzspektrum-Vergleicher (302), zum:

Identifizieren eines erwarteten Frequenzspektrums (301), das mit einem Audio von Medien verbunden ist, die von einem Messgerät (106) erfasst werden, das einer Medienpräsentationsvorrichtung (108) zugeordnet ist, wobei das erwartete Frequenzspektrum (301) in einer Datenbank in Verbindung mit einer Medienkennung, die den Medien entspricht, gespeichert ist; und
Vergleichen des erwarteten Frequenzspektrums (301) mit einem tatsächlichen Frequenzspektrum (303), wobei das tatsächliche Frequenzspektrum (301) auf einer Probe des von dem Messgerät (106) erfassten Mediums basiert; und

einen Medienanrechner (306) zum:

Anrechnen der Medien mit Exposition, wenn auf der Grundlage des Vergleichs kein Spillover festgestellt wird; und
nicht Anrechnen der Medien mit Exposition, wenn auf der Grundlage des Vergleichs ein Spillover festgestellt wird.

7. Spillover-Manager nach Anspruch 6, wobei das tatsächliche Frequenzspektrum eine Darstellung eines Audioteils der Medien in einem Frequenzbereich ist.

**8.** Spillover-Manager nach Anspruch 6, wobei der Frequenzspektrum-Vergleicher (302) dazu dient, das erwartete Frequenzspektrum (301) mit dem tatsächlichen Frequenzspektrum (303) zu vergleichen, um festzustellen, ob ein Audioteil der Medien verzerrt wurde.

**9.** Spillover-Manager nach Anspruch 8, wobei zur Bestimmung, ob der Audioteil der Medien verzerrt wurde, der Frequenzspektrum-Vergleicher (302) eingerichtet ist, eine Summierung der Absolutwerte der Differenzen zwischen den Amplituden der entsprechenden Frequenzkomponenten des tatsächlichen Frequenzspektrums (303) und des erwarteten Frequenzspektrums (301) mit einem Schwellenwert zu vergleichen.

**10.** Spillover-Manager nach Anspruch 6, wobei der Medien-Anrechner (306), wenn ein Spillover erkannt wird, mindestens einen der folgenden Schritte ausführt: Markieren von Medienüberwachungsdaten, die den Medien entsprechen, als nicht angerechnet oder Verwerfen der Medienüberwachungsdaten.

**11.** Greifbares, computerlesbares Speichermedium, das Anweisungen enthält, die, wenn sie ausgeführt werden, einen Prozessor veranlassen, zumindest zum:

Identifizieren von Medien, die von einem ersten Messgerät (106) erfasst werden, das mit einer ersten Medienpräsentationsvorrichtung (108) verbunden ist;
Identifizieren eines erwarteten Frequenzspektrums (301), das mit dem Audio der Medien verbunden ist, wobei das erwartete Frequenzspektrum (301) in einer Datenbank in Verbindung mit einer Medienkennung gespeichert ist, die den Medien entspricht;
Vergleichen des erwarteten Frequenzspektrums (301) mit einem tatsächlichen Frequenzspektrum (303), das von den Medien durch das erste Messgerät erfasst wurde; und
Anrechnen der Medien als eine Medien-Exposition, wenn auf der Grundlage des Vergleichs kein Spillover festgestellt wird.

**12.** Computerlesbares Medium nach Anspruch 11, wobei das tatsächliche Frequenzspektrum (303) eine Frequenzbereichsdarstellung eines Audioteils der Medien in einem Frequenzbereich ist.

**13.** Computerlesbares Medium nach Anspruch 11, wobei das Vergleichen des erwarteten Frequenzspektrums (301) mit dem tatsächlichen Frequenzspektrum (303) ein Bestimmen beinhaltet, wann ein Audioteil der Medien verzerrt wurde.

**14.** Computerlesbares Medium nach Anspruch 13, wobei das Bestimmen, ob der Audioteil der Medien verzerrt war, das Vergleichen einer Summierung von Absolutwerten von Differenzen zwischen Amplituden von entsprechenden Frequenzkomponenten des tatsächlichen Frequenzspektrums (303) und des erwarteten Frequenzspektrums (301) mit einem Schwellenwert umfasst.

**15.** Computerlesbares Medium nach Anspruch 11, wobei die Anweisungen den Prozessor ferner veranlassen, die den Medien entsprechenden Medienüberwachungsdaten zu verwerfen, wenn ein Spillover festgestellt wird.

**Revendications**

**1.** Méthode pour gérer un débordement dans un système de mesure de média, comprenant :

l'identification d'un média détecté par un premier appareil de mesure (106) associé à un premier dispositif de présentation de média (108) ;
l'identification d'un spectre de fréquence attendu (301) associé à un audio du média, le spectre de fréquence attendu (301) étant stocké dans une base de données (126) en association avec un identifiant de média correspondant au média ;
la comparaison du spectre de fréquence attendu (301) à un spectre de fréquence réel (303) collecté à partir du média par le premier appareil de mesure (106) ; et
le crédit au média d'une exposition médiatique lorsque le débordement n'est pas détecté sur la base de la comparaison.

**2.** Méthode selon la revendication 1, dans laquelle le spectre de fréquence réel (303) est une représentation d'une partie audio du média dans un domaine fréquentiel.

**3.** Méthode selon la revendication 1, dans laquelle la comparaison du spectre de fréquence attendu (301) au spectre de fréquence réel (303) inclut le fait de déterminer si un audio du média a été distordu.

**4.** Méthode selon la revendication 3, dans laquelle le fait de déterminer si l'audio a été distordu inclut la comparaison à un seuil d'une sommation de valeurs absolues de différences entre des amplitudes de composantes de fréquence correspondantes du spectre de fréquence réel (303) et du spectre de fréquence attendu (301) .

**5.** Méthode selon la revendication 1, incluant en outre, lorsqu'un débordement est détecté, au moins l'un parmi le non-crédit au média d'une exposition médiatique ou le rejet de données de surveillance de média collectées par le premier appareil de mesure sur la base du média.

6. Gestionnaire de débordement pour gérer un débordement dans un système de mesure de média, comprenant :

un comparateur de spectre de fréquences (302) pour :

identifier un spectre de fréquence attendu (301) associé à un audio d'un média détecté par un appareil de mesure (106) associé à un dispositif de présentation de média (108), le spectre de fréquence attendu (301) étant stocké dans une base de données en association avec un identifiant de média correspondant au média ; et
comparer le spectre de fréquence attendu (301) à un spectre de fréquence réel (303), le spectre de fréquence réel (301) étant basé sur un échantillon du média détecté par l'appareil de mesure (106) ; et
un créditeur de média (306) pour :

créditer le média d'une exposition lorsqu'un débordement n'est pas détecté sur la base de la comparaison ; et
ne pas créditer le média d'une exposition lorsqu'un débordement est détecté sur la base de la comparaison.

7. Gestionnaire de débordement selon la revendication 6, dans lequel le spectre de fréquence réel est une représentation d'une partie audio du média dans un domaine fréquentiel.

8. Gestionnaire de débordement selon la revendication 6, dans lequel le comparateur de spectre de fréquence (302) est destiné à comparer le spectre de fréquence attendu (301) au spectre de fréquence réel (303) pour déterminer si une partie audio du média a été distordue.

9. Gestionnaire de débordement selon la revendication 8, dans lequel pour déterminer si la partie audio du média a été distordue, le comparateur de spectre de fréquence (302) est destiné à comparer à un seuil une sommation de valeurs absolues de différences entre des amplitudes de composantes de fréquence correspondantes du spectre de fréquence réel (303) et du spectre de fréquence attendu (301).

10. Gestionnaire de débordement selon la revendication 6, dans lequel le créditeur de média (306) est destiné, lorsqu'un débordement est détecté, à au moins l'un parmi le marquage des données de surveillance de média correspondant au média comme étant non créditées ou le rejet des données de surveillance de média.

11. Support de stockage tangible lisible par ordinateur comprenant des instructions qui, lorsqu'elles sont exécutées, amènent un processeur à au moins :

identifier un média détecté par un premier appareil de mesure (106) associé à un premier dispositif de présentation de média (108) ;
identifier un spectre de fréquence attendu (301) associé à un audio du média, le spectre de fréquence attendu (301) étant stocké dans une base de données en association avec un identifiant de média correspondant au média ;
comparer le spectre de fréquence attendu (301) à un spectre de fréquence réel (303) collecté à partir du média par le premier appareil de mesure ; et
créditer le média d'une exposition médiatique lorsqu'un débordement n'est pas détecté sur la base de la comparaison.

12. Support lisible par ordinateur selon la revendication 11, dans lequel le spectre de fréquence réel (303) est une représentation en domaine fréquentiel d'une partie audio du support dans un domaine fréquentiel.

13. Support lisible par ordinateur selon la revendication 11, dans lequel la comparaison du spectre de fréquence attendu (301) au spectre de fréquence réel (303) inclut le fait de déterminer quand une partie audio du média a été distordue.

14. Support lisible par ordinateur selon la revendication 13, dans lequel le fait de déterminer si la partie audio du média a été distordue inclut la comparaison à un seuil d'une sommation de valeurs absolues de différences entre des amplitudes de composantes de fréquence correspondantes du spectre de fréquence réel (303) et du spectre de fréquence attendu (301) .

15. Support lisible par ordinateur selon la revendication 11, dans lequel les instructions amènent en outre le processeur à rejeter des données de surveillance de média correspondant au média lorsqu'un débordement est détecté.

FIG. 1

FIG. 2

EP 2 965 244 B1

SPILLOVER
MANAGER
102

METER(S) →

FREQUENCY SPECTRUM
COMPARATOR
302

FREQUENCY
SPECTRUM DATABASE
304

MEDIA CREDITOR
306

TRANSMITTER
308

TO
CENTRAL
FACILITY

FIG. 3A

Expected Frequency Spectrum

301

305

frequency

FIG. 3B

Actual Frequency Spectrum

303

307

frequency

FIG. 3C

```
                          ┌──────────────┐
                          │    START     │
                          └──────┬───────┘
                                 │
    ┌────────────────────────────┤◄─────────────────────────────┐
    │                            ▼                               │
    │  402 ─┐      ┌──────────────────────────────┐   NO         │
    │       ◄──────┤  MONITORING DATA RECEIVED?   ├──────────────┤
    │              └──────────────┬───────────────┘              │
    │                            YES                             │
    │                             ▼                              │
    │  404 ─┐      ┌──────────────────────────────┐   NO         │
    │       ◄──────┤     SPILLOVER DETECTED?      ├──────────┐   │
    │              └──────────────┬───────────────┘          │   │
    │                            YES                         │   │
    │  406 ─┐      ┌──────────────────────────────┐          │   │
    │       ◄──────┤     DO NOT CREDIT MEDIA      │          │   │
    │              └──────────────┬───────────────┘          │   │
    │                             ▼                          │   │
    │         ┌──────────────────────────────────────┐─ 408 │   │
    ◄─────────┤ DISCARD UNCREDITED MONITORING DATA    │      │   │
    │         └──────────────────────────────────────┘      │   │
    │                             ┌────────────────────────◄─┘   │
    │  410 ─┐      ┌──────────────▼───────────────┐              │
    │       ◄──────┤        CREDIT MEDIA          │              │
    │              └──────────────┬───────────────┘              │
    │                             ▼                              │
    │  412 ─┐      ┌──────────────────────────────┐              │
    │       ◄──────┤ EXPORT CREDITED MONITORING DATA │            │
    │              └──────────────────────────────┘              │
    └────────────────────────────────────────────────────────────┘
```

FIG. 4

FIG. 5

START

602 — RECEIVE MONITORING DATA AND FREQUENCY SPECTRUMS

604 — IDENTIFY MEDIA

606 — GET EXPECTED FREQUENCY SPECTRUM OF MEDIA

608 — SIGNAL DISTORTION OCCURRED?     NO

YES

610 — DO NOT CREDIT MEDIA

DISCARD UNCREDITED MONITORING DATA — 612

614 — MARK MONITORING DATA AS CREDITED

616 — TRANSMIT CREDITED MONITORING DATA

FIG. 6

FIG. 7

**REFERENCES CITED IN THE DESCRIPTION**

**Patent documents cited in the description**

- US 79143213
- US 2012148058 A1
- US 7609853 B
- US 5481294 A